(19) **Europäisches Patentamt / European Patent Office / Office européen des brevets**

(11) **EP 2 916 595 B1**

(12) **EUROPEAN PATENT SPECIFICATION**

(45) Date of publication and mention of the grant of the patent:
**29.09.2021 Bulletin 2021/39**

(21) Application number: **13850776.9**

(22) Date of filing: **30.10.2013**

(51) Int Cl.:
**H04W 48/20** (2009.01)  **H04W 48/08** (2009.01)

(86) International application number:
**PCT/KR2013/009719**

(87) International publication number:
**WO 2014/069890 (08.05.2014 Gazette 2014/19)**

(54) **CELL RESELECTION METHOD BASED ON PRIORITY HANDLING IN WIRELESS COMMUNICATION SYSTEM, AND APPARATUS FOR SUPPORTING SAME**

AUF PRIORITÄTSHANDHABUNG BASIERENDES ZELLENNEUAUSWAHLVERFAHREN IN EINEM DRAHTLOSEN KOMMUNIKATIONSSYSTEM UND VORRICHTUNG ZUR UNTERSTÜTZUNG DIESES VERFAHRENS

PROCÉDÉ DE RESÉLECTION DE CELLULES BASÉE SUR UNE GESTION PRIORITAIRE DANS UN SYSTÈME DE COMMUNICATION SANS FIL ET APPAREIL PRENANT EN CHARGE LEDIT PROCÉDÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.10.2012 US 201261719967 P**

(43) Date of publication of application:
**09.09.2015 Bulletin 2015/37**

(73) Proprietor: **LG Electronics Inc.**
**Yeongdeungpo-gu**
**Seoul 150-721 (KR)**

(72) Inventors:
 • **JUNG, Sunghoon**
   **Seoul 137-130 (KR)**
 • **LEE, Youngdae**
   **Seoul 137-130 (KR)**
 • **PARK, Sungjun**
   **Seoul 137-130 (KR)**
 • **YI, Seungjune**
   **Seoul 137-130 (KR)**
 • **LEE, Jaewook**
   **Seoul 137-130 (KR)**

(74) Representative: **Frenkel, Matthias Alexander**
**Wuesthoff & Wuesthoff**
**Patentanwälte PartG mbB**
**Schweigerstraße 2**
**81541 München (DE)**

(56) References cited:
  KR-A- 20120 011 756   KR-A- 20120 065 425
  KR-A- 20120 115 946   US-A1- 2012 135 732

 • **NOKIA CORPORATION ET AL: "NW failure and UE reselection", 3GPP DRAFT; R2-122530 NW FAILURE AND UE RESELECTION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Prague, Czech Republic; 20120521 - 20120525, 14 May 2012 (2012-05-14), XP050606963, [retrieved on 2012-05-14]**
 • **ALCATEL-LUCENT ET AL: "RAN overload handling using RRC connection Rejection", 3GPP DRAFT; 36331_CR_XXXX_(REL-11)_R2-125163-REJECT-DE PRIO-V8, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Bratislava, Slovakia; 20121008 - 20121012 12 October 2012 (2012-10-12), XP050666819, Retrieved from the Internet: URL:http://www.3gpp.org/ftp/tsg_ran/WG2_RL 2/TSGR2_79bis/Docs/ [retrieved on 2012-10-12]**

- **RENESAS MOBILE EUROPE LTD: "Redirection/Reselection on RRC Connection Reject", 3GPP DRAFT; R2-122609 REDIRECTIONRESELECTION ON RRC CONNECTION REJECT, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Prague, Czech Republic; 20120521 - 20120525, 14 May 2012 (2012-05-14), XP050607051, [retrieved on 2012-05-14]**

- **'User Equipment (UE) procedures in idle mode (Release 11)' 3GPP TS36.304 V11.1.0 21 September 2012, XP055254175**
- **None**

**Description**

**BACKGROUND OF THE INVENTION**

Field of the invention

The present invention relates to wireless communication, and more particularly, to a cell reselection method based on priority handling in a wireless communication system and an apparatus for supporting the same.

Related Art

3GPP (3rd Generation Partnership Project) LTE (long term evolution) which is improvement of UMTS (Universal Mobile Telecommunications System) has been introduced as 3GPP release 8. The 3GPP LTE uses OFDMA (orthogonal frequency division multiple access) in a downlink, and uses SC-FDMA (Single Carrier-frequency division multiple access) in an uplink. The 3GPP LTE adopts MIMO (multiple input multiple output) having maximum four antennas. Recently, a discussion of 3GPP LTE-A (LTE-Advanced) which is the evolution of the 3GPP LTE is in progress.

Due to mobility of a terminal as a mobile device, the quality of a service provided to a current terminal may deteriorate or a cell that may provide a better service can be sensed. Therefore, the terminal may move to a new cell and such an operation is referred to as movement execution of the terminal.

In a cell reselection procedure, the terminal selects a target cell based on a frequency priority. The terminal may acquire information associated with the priority through system information of the cell or dedicated signaling. The terminal attempts connection to the target cell through transmission of a connection configuration message. When the connection to the target cell is completed, the terminal may receive the service from the target cell.

A terminal's request for connection establishment to a specific cell may be rejected, and as a result, the terminal may perform the cell reselection procedure again. In some cases, the terminal may be configured to apply a lowest priority on cell reselection to a frequency of the cell in which the request for the connection establishment or radio access technology (RAT) of the corresponding cell. Therefore, a priority of the frequency or priorities of all frequencies of the RAT may be considered to be lower than other priorities set by a network.

A state of the terminal may be changed while lowering of the priority depending on the connection establishment rejection is being applied and even in this case, continuously applying the lowest priority to a specific frequency and/or frequencies of specific RAT may not be appropriate in terms of an operation of the terminal. Therefore, a cell reselection method based on priority handling of a scheme of selectively applying the priority according to a state of the terminal needs to be proposed.

3GPP document R2-122530 titled "NW failure and UE reselection" relates to the issue of UEs subjected to a ACB or RRCConnectionReject possibly not receiving service from the network. Several proposals in this regard are made.

3GPP document R2-125163 titled "RAN overload handling using RRC connection Rejection" relates to the issue of moving users to another frequency or RAT.

3GPP document R2-122609 titled "Redirection/Reselection on RRC Connection Reject" relates to the issue of enabling the UE to establish a connection on another RAT than EUTRAN if the RRC Connection is rejected. Potential RAN solutions are discussed.

**SUMMARY OF THE INVENTION**

The present invention provides a cell reselection method based on priority handling in a wireless communication system and an apparatus for supporting the same. Specifically, a cell reselection method according to claim 1 performed by a terminal in a wireless communication system and a wireless device according to claim 2 that operates in a wireless communication system are presented.

In another aspect of the present disclosure, a cell reselection method performed by a terminal in a wireless communication system is disclosed. The method includes: receiving first priority information for at least one frequency, receiving second priority information for the at least one frequency, performing cell reselection with selectively applying any one of the first priority information and second priority information based on the state of the terminal. The first priority information is provided through a connection rejection message and provides instructions on the priority for the one or more frequencies to be lowered, and the second priority information is provided from a current cell through system information.

The performing of the cell reselection may include applying the first priority information to the cell reselection by considering that the at least one frequency has a lowest priority.

The applying of the first priority information may be performed when the terminal is in a normal camp state (camped normally state).

The first priority information may further indicate a timer value which is a time interval to which the first priority information is applied, and the performing of the cell reselection may include starting a timer having the timer value when the first priority information is received.

The performing of the cell reselection may further include stopping the application of the first priority information when the timer expires.

The performing of the cell reselection may include applying the second priority information to the cell reselection when the terminal is a camped on any cell state (camped on any cell state).

The performing of the cell reselection may further include conserving the first priority information when the terminal is in the camped on any cell state.

When the terminal is in the camped on any cell state, the first priority information may be not applied to the cell reselection.

In yet another aspect of the present disclosure, a wireless device that operates in a wireless communication system is disclosed. The wireless device includes: a radio frequency (RF) unit which transmits or receives a radio signal and a processor which operates in a functional association with the RF unit. The processor is configured to receive first priority information for at least one frequency, receive second priority information for the at least one frequency, and perform cell reselection with selectively applying any one of the first priority information and second priority information based on the state of the terminal. The first priority information is provided through a connection rejection message and provides instructions on the priority for the one or more frequencies to be lowered, and the second priority information is provided from a current cell through system information.

In a cell reselection method based on priority handling according to an embodiment of the present invention, a priority is selectively applied a camp-on state of a terminal, and as a result, cell reselection can be performed. While a network instructs a lowest priority depending on connection establishment rejection to the terminal, the terminal can more flexibly perform the cell reselection in accordance with a current communication environment. Therefore, although the terminal is instructed the lowest priority depending on the connection establishment rejection from the network, an opportunity in which the terminal can camp on an acceptable cell or a normal cell can be prevented from being lowered. Consequently, the terminal camps on a cell that can provide a more appropriate service to attempt accessing the corresponding cell, thereby more efficiently receiving a service from the network.

## BRIEF DESCRIPTION OF THE DRAWINGS

FIG. 1 illustrates a wireless communication system to which the present invention is applied.
FIG. 2 is a block diagram illustrating a radio protocol architecture for a user plane.
FIG. 3 is a block diagram illustrating a radio protocol architecture for a control plane.
FIG. 4 is a flowchart illustrating an operation of the UE in the RRC idle state.
FIG. 5 is a flowchart illustrating a process of establishing RRC connection.
FIG. 6 is a flowchart illustrating an RRC connection reconfiguration process.
FIG. 7 is a diagram illustrating a RRC connection re-establishment procedure.
FIG. 8 is a flowchart illustrating a cell reselection method based on priority handling according to an example useful for understanding the invention.
FIG. 9 is a flowchart illustrating one example of a cell reselection method based on priority handling according to an embodiment of the present invention.
FIG. 10 is a flowchart illustrating another example of the cell reselection method based on priority handling according to the embodiment of the present invention.
FIG. 11 is a block diagram illustrating a wireless device in which the embodiment of the present invention is implemented.

## DESCRIPTION OF EXEMPLARY EMBODIMENTS

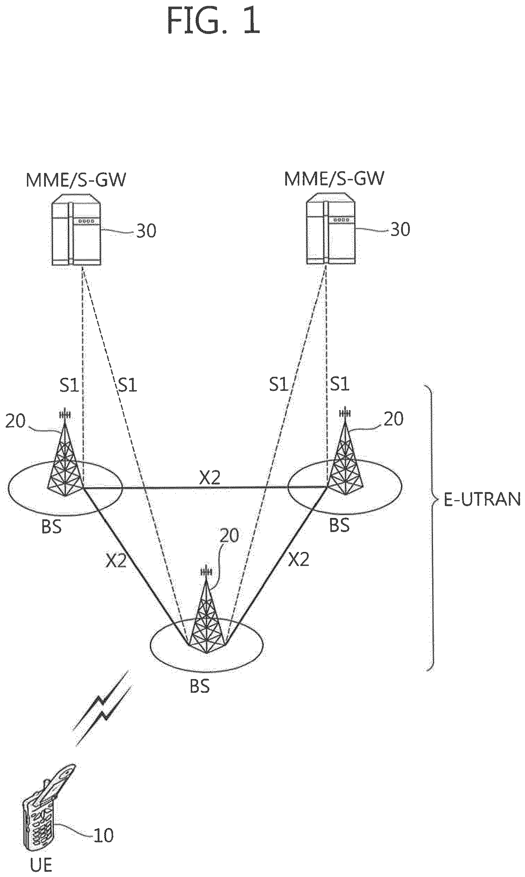

FIG. 1 illustrates a wireless communication system to which the present invention is applied. The wireless communication system may be called an evolved-UMTS terrestrial radio access network (E-UTRAN), or a long term evolution (LTE)/LTE-A system.

The E-UTRAN includes a base station (BS) 20 which provides a control plane and a user plane to user equipment (UE) 10. The UE 10 may be fixed or have mobility, and may be referred to as other terms such as a mobile station (MS), a user terminal (UT), a subscriber station (SS), a mobile terminal (MT), and a wireless device. The BS 20 generally represents a fixed station that communicates with the UE 10 and may be referred to as other terms such as an evolved-NodeB (eNB), a base transceiver system (BTS), and an access point.

The BSs 20 may be connected to each other through an X2 interface. The BS 20 is connected with an evolved packet core (EPC) 30 through an S1 interface, and more particularly, connected with a mobility management entity (MME) through an S1-MME and a serving gateway (S-GW) through an S1-U.

The EPC 30 is constituted by the MME, the S-GW, and a packet data network-gateway (P-GW). The MME has access information of the UE or information regarding capacity of the UE, and the information is frequently used in mobility management of the UE. The S-GW is a gateway having the E-UTRAN as an end point, and the P-GW is a gateway having the PDN as an end point.

Layers of a radio interface protocol between the UE and the network may be divided into a first layer L1, a second layer L2, and a third layer L3 based on three lower layers of an open system interconnection (OSI) standard model which is widely known in the communication system, and among them, a physical layer to which the first layer belongs provides an information transfer service using a physical channel, and a radio resource control (RRC) layer positioned on the third layer serves to control a radio resource between the UE and the network. To this end, the RRC layer exchanges an RRC message between the UE and the network.

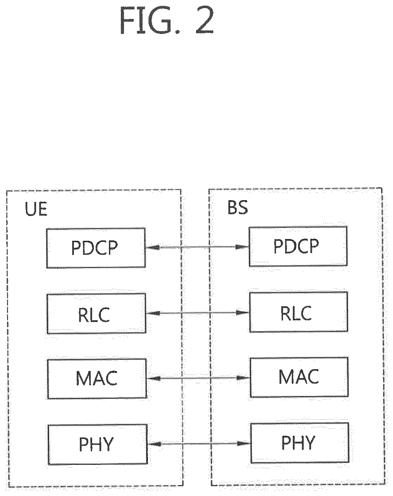

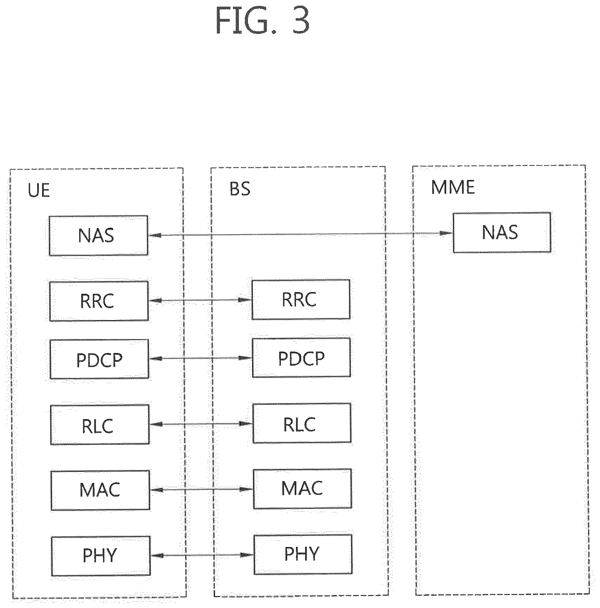

FIG. 2 is a block diagram illustrating a radio protocol architecture for a user plane. FIG. 3 is a block diagram illustrating a radio protocol architecture for a control plane. The user plane is a protocol stack for user data transmission, and the control plane is a protocol stack for control signal transmission.

Referring to FIGS. 2 and 3, a physical (PHY) layer provides an information transfer service to an upper layer by using a physical channel. The PHY layer is connected with a medium access control (MAC) layer which is the upper layer through a transport channel. Data move between the MAC layer and the PHY layer through the transport channel. The transport channel is classified according to how the data is transmitted through a radio interface with any characteristic.

The data move between different PHY layers, that is, the PHY layers of the transmitter and the receiver through the physical channel. The physical channel may be modulated by an orthogonal frequency division multiplexing (OFDM) scheme, and use a time and a frequency as the radio resource.

A function of the MAC layer includes mapping between a logical channel and a transport channel and multiplexing/demultiplexing to a transport block provided to the physical channel on the transport channel of a MAC service data unit (SDU) which belongs to the logical channel. The MAC layer provides a service to a radio link control (RLC) layer through the logical channel.

A function of the RLC layer includes concatenation, segmentation, and reassembly of the RLC SDU. In order to secure various quality of services (QoS) required by a radio bearer (RB), an RLC layer provides three operation modes of a transparent mode (TM), an unacknowledged mode (UM), and an acknowledged mode (AM). The AM RLC provides an error correction through an automatic repeat request (ARQ).

The radio resource control (RRC) layer is defined only in the control plane. The RRC layer is related with configuration, re-configuration, and release of the RBs to serve to control the logical channel, the transport channel, and the physical channels. The RB means a logic path provided by a first layer (PHY layer) and a second layer (MAC layer, RLC layer, or PDCP layer) in order to transfer the data between the UE and the network.

A function of a packet data convergence protocol (PDCP) layer in the user plane includes transfer, header compression, and ciphering of the user data. A function of the PDCP layer in the control plane includes transfer and ciphering/integrity protection of control plane data.

The configuration of the RB means a process of defining characteristics of the radio protocol layer and the channel in order to provide a specific service and configuring each detailed parameter and operation method. The RB may be divided into a signaling RB (SRB) and a data RB (DRB) again. The SRB is used as a path for transmitting an RRC message in the control plane, and the DRB is used as a path for transporting user data in the user plane.

When RRC connection is established between the RRC layer of the UE and the RRC layer of the E-UTRAN, the UE is in an RRC connected state, and if not, the UE is in an RRC idle state.

A downlink transport channel for transporting the data to the UE from the network includes a broadcast channel (BCH) for transporting system information and a downlink shared channel (SCH) for transporting user traffic or a control message. The traffic or the control message of a downlink multicast or broadcast service may be transported through the downlink SCH, or may be transported through a separate downlink multicast channel (MCH). Meanwhile, an uplink transport channel for transporting the data from the UE to the network includes a random access channel (RACH) for transporting an initial control message and an uplink shared channel (SCH) for transporting the user traffic or the control message in addition to the RACH.

A logical channel which is above the transport channel and mapped in the transport channel includes a broadcast control channel (BCCH), a paging control channel (PCCH), a common control channel (CCCH), a multicast control channel (MCCH), a multicast traffic channel (MTCH), and the like.

The physical channel is constituted by several OFDM symbols in a time domain and several sub-carriers in a frequency domain. One sub-frame is constituted by a plurality of OFDM symbols in the time domain. The RB as a resource allocation unit is constituted by a plurality of OFDM symbols and a plurality of sub-carriers. Further, each sub-frame may use specific sub-carriers of specific OFDM symbols (for example, first OFDM symbols) of the corresponding sub-frame for the physical downlink control channel (PDCCH), that is, a L1/L2 control channel. A transmission time interval (TTI) is a unit time of sub-frame transmission.

Hereinafter, an RRC state of the UE and an RRC connection method will be described.

The RRC state means whether the RRC layer of the UE is logical-connected with the RRC layer of the E-UTRAN or not, and a case where the RRC layer of the UE is connected with the RRC layer of the E-UTRAN is called a RRC connection state, and a case where the RRC layer of the UE is not connected with the RRC layer of the E-UTRAN is called an RRC idle state. Since the RRC connection exists in the UE in the RRC connection state, the E-UTRAN may determine the existence of the corresponding UE in a cell unit, and as a result, the UE may be efficiently controlled. On the other hand, the UE in the RRC idle state may not be determined by the E-UTRAN, and a core network (CN) is managed by a tracking area unit which is a larger area unit than the cell. That is, in the UE in the RRC idle state, only the existence is determined by a large area unit, and the UE needs to move in the RRC connection state in order to receive a general mobile communication service such as voice or data.

When the user first turns on the power of the UE, the UE first searches a proper cell and then stays in the RRC idle state in the corresponding cell. The UE in the RRC idle state establishes the RRC connection with the E-UTRAN through an RRC connection procedure only when the RRC connection is required, and is transited into the RRC connection state. There are several cases where the UE in the RRC idle state requires the RRC connection, and for example, uplink data transmission is required due to reasons such as user's call attempt, or a response message to a case where a paging message is received from the E-UTRAN is transmitted.

A non-access stratum (NAS) layer positioned above the RRC layer performs functions such as a session management and a mobility management.

In the NAS layer, in order to manage mobility of the UE, two states of EDEPS mobility management-REGISTERED (EMM-REGISTER) and EMM-DEREGISTERED are defined, and the two states are applied to the UE and the MME. The initial UE is in the EMM-DEREGISTERED state, and the UE performs a procedure of registering the UE in the corresponding network through an initial attaching procedure so as to be connected to the network. When the attaching procedure is successfully performed, the UE and the MME are in the EMM-REGISTERED state.

In order to manage signaling connection between the UE and the EPS, two states of an EPS connection management (ECM)-IDLE state and an ECM-CONNECTED state, and the two states are applied to the UE and the MME. When the UE in the ECM-IDLE state is RRC-connected with the E-UTRAN, the corresponding UE becomes in the ECM-CONNECTED state. When the MME in the ECM-IDLE state is S1-connected with the E-UTRAN, the corresponding MME becomes in the ECM-CONNECTED state. When the UE is in the ECM-IDLE state, the E-UTRAN does not have context information of the UE. Accordingly, the UE in the ECM-IDLE state performs a procedure related with the mobility based on the UE such as cell selection or cell reselection without receiving a command of the network. On the contrary, when the UE is in the ECM-CONNECTED state, the mobility of the UE is managed by the command of the network. When a position of the UE in the ECM-IDLE state is different from a position which is known to the network, the UE notifies the corresponding position of the UE to the network through a tracking area updating procedure.

Next, the system information will be described.

The system information includes necessary information which the UE needs to known so as to be connected to the BS. Accordingly, the UE needs to receive all the system information before being connected to the BS, and further, needs to have latest system information at all times. In addition, since the system information is information to be known by all the UE in one cell, the BS periodically transmits the system information. System information is divided into a master information block (MIB) and a plurality of system information blocks (SIB).

The MIB may include a limited number of parameters required to be obtained for other information from a cell, which are most requisite and are most frequently transmitted. User equipment first finds the MIB after downlink synchronization. The MIB may include information including a downlink channel bandwidth, a PHICH configuration, an SFN that supports synchronization and operates as a timing reference, and an eNB transmission antenna configuration. The MIB may be broadcast-transmitted through a BCH.

System information block type 1 (SIB1) among the included SIBs is transmitted while being included in a message of "SystemInformationBlockType1" and SIBs other than the SIB1 is transmitted while being included in a system information message. Mapping the SIBs to the system information message may be flexibly configured by scheduling information list parameters included in the SIB1. However, each SIB may be included in a single system information message and only SIBs having the same scheduling requirement value (e.g., cycle) may be mapped to the same system information message. Further, system information block type 2 (SIB2) is continuously mapped to a system information message corresponding to a first entry in a system information message list of a scheduling information list. A plurality of system information messages may be transmitted within the same cycle. The SIB1 and all information system information messages are transmitted through a DL-SCH.

In addition to the broadcast transmission, in the E-UTRAN, the SIB1 may be dedicatedly signaled while including a parameter similarly to a value set in the related art and in this case, the SIB1 may be transmitted while being included in an RRC connection reconfiguration message.

The SIB1 includes information associated with a user cell access and defines scheduling of other SIBs. The SIB1 may include PLMN identifiers of the network, a tracking area code (TAC) and a cell ID, a cell barring status indicating whether the cell is a cell which may camp on, a lowest receiving level required in the cell, which is used as a cell reselection reference, and information associated with transmission time and cycle of other SIBs.

The SIB2 may include radio resource configuration information common to all terminals. The SIB2 may include information associated with an uplink carrier frequency and an uplink channel bandwidth, an RACH configuration, a paging configuration, an uplink power control configuration, a sounding reference signal configuration, and a PUCCH configuration and a PUSCH configuration supporting ACK/NACK transmission.

The terminal may apply acquisition and change sensing procedures of the system information only to a PCell. In an SCell, the E-UTRAN may provide all system information associated with an RRC connection state operation through dedicated signaling when the corresponding SCell is added. When the system information associated with the configured SCell is changed, the E-UTRAN may release and add the considered SCell later and the release and addition may be performed together with the single RRC connection reconfiguration message. The E-UTRAN may configure parameter values other than a value broadcasted in the considered SCell through the dedicated signaling.

The terminal needs to guarantee validity of specific type system information and the system information is referred to as required system information. The required system information may be defined as follows.

- In the case where the terminal is in an RRC idle state: It needs to be guaranteed that the terminal has valid versions of the MIB and the SIB1 as well as the SIB2 to SIB8 and this may be followed by supporting a considered RAT.
- In the case where the terminal is in an RRC connection state: It needs to be guaranteed that the terminal has the valid versions of the MIB, the SIB1, and the SIB2.

In general, the validity of the system information may be guaranteed within a maximum of 3 hours after the system information is acquired.

Generally, services provided to the UE by the network may be divided into three types to be described below. Further, the UE differently recognizes the cell type according to which service may be provided. First, the services types will be described below, and then the cell types will be described.

1) Limited service: The service provides an emergency call and an earthquake and tsunami warning system (ETWS), and may be provided in an acceptable cell.

2) Normal service: The service means a public use of a general use, and may be provided in a suitable or normal cell.

3) Operator service: The service means a service for a communication network operator, and the cell may be used by only the communication network operator and may not be used by a general user.

In relation to the service type provided by the cell, the cell types may be divided below.

1) Acceptable cell: A cell in which the UE may receive the limited service. The cell is a cell which is not barred and satisfies a cell selection reference of the UE in the corresponding UE.

2) Suitable cell: A cell in which the UE may receive the normal service. The cell satisfies a condition of the acceptable cell and simultaneously satisfies additional conditions. As the additional conditions, the cell needs to belong to a public land mobile network (PLMN) to which the corresponding UE may be connected and be a cell in which the performance of the tracking area updating procedure of the UE is not barred. When the corresponding cell is a CSG cell, the UE needs to be a cell to be connected to the corresponding cell as the CSG member.

3) Barred cell: The cell is a cell which broadcasts information on a cell barred through the system information.

4) Reserved cell: The cell is a cell which broadcasts information on a cell reserved through the system information.

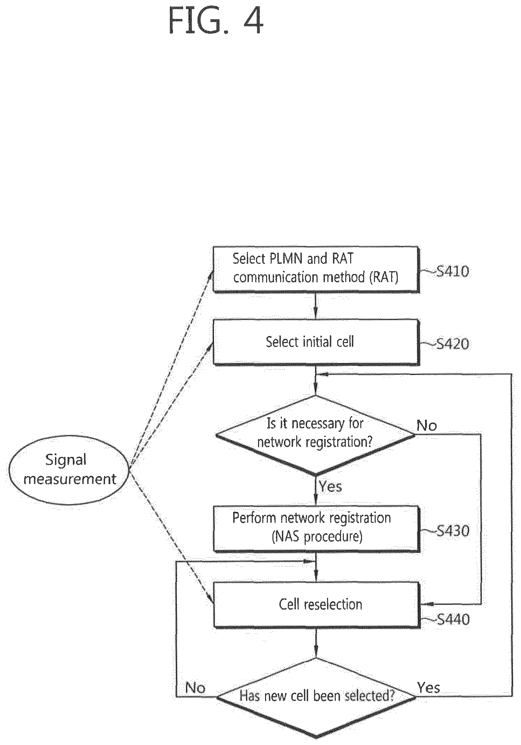

FIG. 4 is a flowchart illustrating an operation of the UE in the RRC idle state. FIG. 4 illustrates a procedure of registering a UE in which initial power is turned on in the network through a cell selection process and reselecting the cell if necessary.

Referring to FIG. 4, the UE selects a radio access technology (RAT) for communicating with the PLMN which is a network to receive the service (S410). Information on the PLMN and the RAT may be selected by the user of the UE, and stored in a universal subscriber identity module (USIM) to be used.

The UE selects the measuring BS and a cell having largest value among cells in which signal intensities and quality measured from the BS are larger than a predetermined value (Cell Selection) (S420). This is performing the cell selection by the turned-on UE and may be called initial cell selection. The cell selection procedure will be described below. After the cell selection, the UE receives system information which the BS periodically transmits. The aforementioned predetermined value means a value defined in the system for ensuring the quality for the physical signal in the data transmission/reception. Accordingly, the value may vary according to the applied RAT.

The UE performs a network registering procedure in the case where network registering is required (S430). The UE registers self-information (e.g., IMSI) in order to receive a service (e.g., paging) from the network. The UE needs not to be registered in the connected network whenever selecting the cell, but is registered in the network in the case where information (e.g., tracking area identity (TAI)) on the network received from the system information and information on a network which is known to the UE.

The UE performs cell reselection based on a service environment, a UE environment, or the like which is provide by the cell (S440). The UE selects one of other cells providing a better signal characteristic than the cell of the BS to which the UE is connected, when the value of the intensity or the quality of the signal measured from the BS receiving the service is a value measured from the BS of the neighbor cell. This process is distinguished from the initial cell selection of the second process to be called cell re-selection. In this case, in order to prevent the cell from being frequently reselected depending on the change in signal characteristic, there is a temporal constraint. The cell re-selection procedure will be described below.

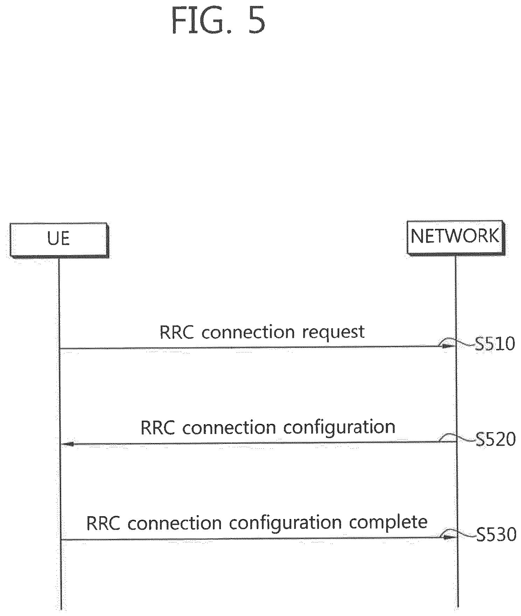

FIG. 5 is a flowchart illustrating a process of establishing RRC connection.

The UE transports an RRC connection request message requesting the RRC connection to the network (S510). The network transports an RRC connection setup message in a response for the RRC connection request (S520). After receiving the RRC connection setup message, the UE enters an RRC connection mode.

The UE transports to the network an RRC connection setup complete message used for verifying successful completion of the RRC connection establishment (S530).

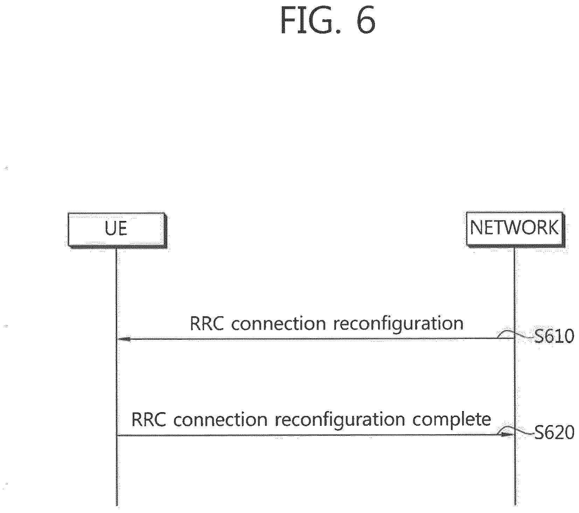

FIG. 6 is a flowchart illustrating an RRC connection reconfiguration process. The RRC connection reconfiguration is used for modifying the RRC connection. The RRC connection reconfiguration is used for RB establishment/modify/release, handover performance, and measurement setup/modify/release.

The network transports to the UE an RRC connection reconfiguration message for modifying the RRC connection (S610). The UE transports to the network an RRC connection reconfiguration complete message used for verifying successful completion of the RRC connection reconfiguration, as a response to the RRC connection reconfiguration (S620).

Hereinafter, the PLMN will be described.

The PLMN is a network which is arranged and operated by a mobile network operator. Each mobile network operator operates one or more PLMNs. Each PLMN may be identified as a mobile country code (MCC) and a mobile network code (MNC). PLMN information of the cell is included in the system information to be broadcasted.

In PLMN selection, cell selection, and cell re-selection, various types of PLMNs may be considered by the UE.

Home PLMN (HPLMN): PLMN having a MCC and a MNC matched with the MCC and the MNC of the UE IMSI.

Equivalent HPLMN (EHPLMN): PLMN handled to be equivalent to the HPLMN.

Registered PLMN (RPLMN): PLMN in which position registration is successfully completed.

Equivalent PLMN (EPLMN): PLMN handled to be equivalent to the RPLMN.

Each mobile service consumer is subscribed in the HPLMN. When a general service is provided to the UE by the HPLMN or the EHPLMN, the UE is not in a roaming state. On the other hand, when the service is provided to the UE by a PLMN other than the HPLMN/EHPLMN, the UE is in the roaming state, and the PLMN is called a visited PLMN (VPLMN).

The UE searches a usable PLMN and selects a suitable PLMN which may receive the service when the power is turned on in an initial stage. The PLMN is a network which is deployed or operated by a mobile network operator. Each mobile network operator operates one or more PLMNs. Each PLMN may be identified by a mobile country code (MCC) and a mobile network code (MNC). PLMN information of the cell is included in the system information to be broadcasted. The UE attempts to register the selected PLMN. When the registration is completed, the selected PLMN becomes a registered PLMN (RPLMN). The network may signal a PLMN list to the UE, and PLMNs included in the PLMN list may be considered as the PLMN such as the RPLMN The UE registered in the network needs to be reachable by the network at all times. If the UE is in the ECM-CONNECTED state (equally, the RRC connection state), the network recognizes that the UE receives the service. However, when the UE is in the ECM-IDLE state (equally, the RRC idle state), the situation of the UE is not valid in the eNB, but stored in the MME. In this case, the position of the UE is in the ECM-IDLE state is notified to only the MME with granularity of the list of the tracking areas (TAs). A single TA is identified by a tracking area identity (TAI) constituted by a PLMN identity to which the TA belongs and a tracking area code (TAC) uniquely expressing the TA in the PLMN.

Next, among the cells provided by the selected PLMN, the UE selects a cell having signal quality and characteristic which may receive a suitable service.

Next, a procedure of selecting the cell by the UE will be described in detail.

When the power is turned on or the UE stays in the cell, the UE performs procedures for receiving the service by selecting/re-selecting a cell having proper quality.

The UE in the RRC idle state selects the cell having the proper quality at all times and needs to be prepared to receive the service through the selected cell. For example, the UE in which the power is just turned on needs to select the cell having the proper quality for registration to the network. When the UE in the RRC connection state enters the RRC idle state, the UE needs to select the cell staying in the RRC idle state. As such, a process of selecting the cell which satisfies any condition so that the UE stays in a service stand-by state such as the RRC idle state is called cell selection. Since the cell selection is performed in a state where the cell in which the UE stays in the RRC idle state is not currently determined, it is more important to select the cell as quickly as possible. Accordingly, so long as the cell is a cell providing radio signal quality of a predetermined level or more, even though the cell is not the cell providing the best signal quality to the UE, the cell may be selected in the cell selection process of the UE.

Hereinafter, with reference to 3GPP TS 36.304 V8.5.0 (2009-03) "User Equipment (UE) procedures in idle mode (Release 8)", a method and a procedure of selecting the cell by the UE in 3GPP LTE will be described in detail.

The cell selection process is largely divided to two processes.

First, as an initial cell selection process, the UE has no previous information on the radio channel in this process. Accordingly, the UE searches all radio channels in order to find a suitable cell. The UE finds the strongest cell in each channel. Thereafter, when the UE just finds the suitable cell stratifying a cell selection reference, the UE selects the corresponding cell.

Next, the UE may select the cell by using the stored information or using information broadcasted in the cell. Accordingly, the cell selection may be quickly performed as compared with the initial cell selection process. The UE selects the corresponding cell when just finding the cell satisfying the cell selection reference. If the UE does not find the suitable cell satisfying the cell selection reference through the process, the UE performs the initial cell selection process.

After the UE selects any cell through the cell selection process, the intensity or the quality of the signal between the UE and the BS may be changed according to mobility of the UE, a change in radio environment, or the like. Accordingly, when the quality of the selected cell deteriorates, the UE may select another cell providing better quality. As such, in the case of selecting the cell again, generally, the UE selects the cell providing better signal quality than the currently selected cell. This process is called cell reselection. The cell reselection process generally has a primary object to select a cell providing the best quality to the UE in terms of the quality of the radio signal.

In addition to the quality of the radio signal, the network determines a priority for each frequency to notify the determined priority to the UE. In the UE receiving the priority, the priority is first considered as compared the radio signal quality reference in the cell reselection process.

As such, there is the method of selecting or reselecting the cell according to a signal characteristic in the radio environment, and in the case of selecting the cell for reselection during the cell reselection, there may be methods of reselecting the cell according to a RAT of the cell and a frequency characteristic below.

- Intra-frequency cell reselection: The UE reselects a cell having the same RAT and the same center-frequency as the cell during camping.

- Inter-frequency cell reselection: The UE reselects a cell having the same RAT as and a different center-frequency from the cell during camping.

- Inter-RAT cell reselection: The UE reselects a cell using a different RAT from the RAT during camping.

A principle of the cell reselection process is as follows.

First, the UE measures the quality of the serving cell and the quality of the neighbor cell for the cell reselection.

Second, the cell reselection is performed based on a cell reselection reference. The cell reselection reference has the following characteristics in association with the measurement of the serving cell and the neighbor cell.

The intra-frequency cell reselection is basically based on ranking. The ranking is an operation of defining index values for evaluating the cell reselection and ranking cells in an order of sizes of the index values by using the index values. A cell having the best index value is commonly called a best ranked cell. The cell index value is based on a value measured by the UE with respect to the corresponding cell and is a value applying a frequency offset or a cell offset if necessary.

The inter-frequency cell reselection is based on a frequency priority provided by the network. The UE attempts to camp on in a frequency having the highest frequency priority. The network may provide a frequency priority to be commonly applied to the UEs in the cell through the broadcast signaling or provide a priority for each frequency for every UE through dedicated signal for each UE. The cell reselection priority provided through the broadcast signaling may be referred to as a common priority, and the cell reselection priority set by the network for each UE may be referred to as a dedicated priority. When the UE receives the dedicated priority, the UE may receive a validity time related with the dedicated priority together. When the UE receives the dedicated priority, the UE starts a validity timer set as the validity time received together. The UE applies the dedicated priority in the RRC idle mode while the validity timer operates. When the validity timer ends, the UE discards the dedicated priority and applies the common priority again.

For the inter-frequency cell reselection, the network may provide parameters (for example, a frequency-specific offset) used in the cell reselection to the UE for each frequency.

For the infra-frequency cell reselection or the inter-frequency cell reselection, the network may provide a neighbor cell list (NCL) used in the cell reselection to the UE. The NCL includes cell-specific parameters (for example, a cell-specific offset) used in the cell reselection.

For the intra-frequency cell reselection or the inter-frequency cell reselection, the network may provide a cell reselection black list used in the cell reselection to the UE. The UE does not perform the cell reselection with respect to the cell included in the black list.

Next, the ranking performed in the cell reselection evaluating process will be described.

A ranking criterion used to give the priority of the cell is defined by Equation 1.

[Equation 1]

$$R_S = Q_{meas,s} + Q_{hyst,} \quad R_n = Q_{meas,n} - Q_{offset}$$

Here, $R_s$ represents a ranking criterion of the serving cell, $R_n$ represents a ranking criterion of the neighbor cell, $Q_{meas,s}$ represents a quality value measured with respect to the serving cell by the UE, $Q_{meas,n}$ represents a quality value measured with respect to the neighbor cell by the UE, $Q_{hyst}$ represents a hysteresis value for ranking, and $Q_{offset}$ represents an offset between the both cells.

In the intra-frequency, when the UE receives the offset $Q_{offsets,n}$ between the serving cell and the neighbor cell, $Q_{offset}=Q_{offsets,n}$, and when the UE does not receive $Q_{offsets,n}$, $Q_{offset} = 0$.

In the inter-frequency, when the UE receives the offset $Q_{offsets,n}$ for the corresponding Cell, $Q_{offset} = Q_{offsets,n} + Q_{frequency}$, and when the UE does not receive $Q_{offsets,n}$, $Q_{offset} = Q_{frequency}$.

When the ranking criterion $R_s$ of the serving cell and the ranking criterion $R_n$ of the neighbor cell are changed in a similar state, the ranking order is frequently reversed as the changing result, and as a result, the UE may alternately reselect the two cells. $Q_{hyst}$ is a parameter for preventing the UE from alternately reselecting the two cells by giving the hysteresis in the cell reselection.

The UE measures the $R_s$ of the serving cell and the $R_n$ of the neighbor cell according to the Equation 1, regards the cell having the largest ranking criterion value as the best ranked cell, and selects the cell.

According to the reference, it can be seen that the quality of the cell acts as the most important reference in the cell reselection. When the reselected cell is not the suitable cell, the UE excludes the corresponding frequency or the corresponding cell from the cell reselection target.

Hereinafter, a radio link failure (RLF) will be described.

The UE continuously performs the measurement in order to maintain the quality of the radio link with the serving cell receiving the service. The UE determines whether the communication is impossible in the current situation due to deterioration of the quality of the radio link. When the communication is almost impossible due to the low quality of the serving cell, the UE determines the current situation as a radio link failure.

When the radio link failure is determined, the UE gives up the communication maintenance with the current serving cell, selects a new cell through the cell selection (or cell reselection) procedure, and attempts the RRC connection re-establishment to the new cell.

In a specification of 3GPP LTE, cases where the normal communication is impossible are exemplified below:

- a case where the UE determines that there is a serious problem in the downlink communication link quality based on the radio quality measuring result of the PHY layer (determines that the quality of the PCell is low during the RLM.

- a case where the UE determines that there is a problem in the uplink transmission when a random access procedure is continuously failed in a MAC sub-layer.

- a case where the UE determines that there is a problem in the uplink transmission when uplink data transmission is continuously failed in an RLC sub-layer.

- a case where the UE determines that the handover is failed.

- a case where a massage received by the UE does not pass through an integrity check.

Hereinafter, the RRC connection re-establishment procedure will be described in more detail.

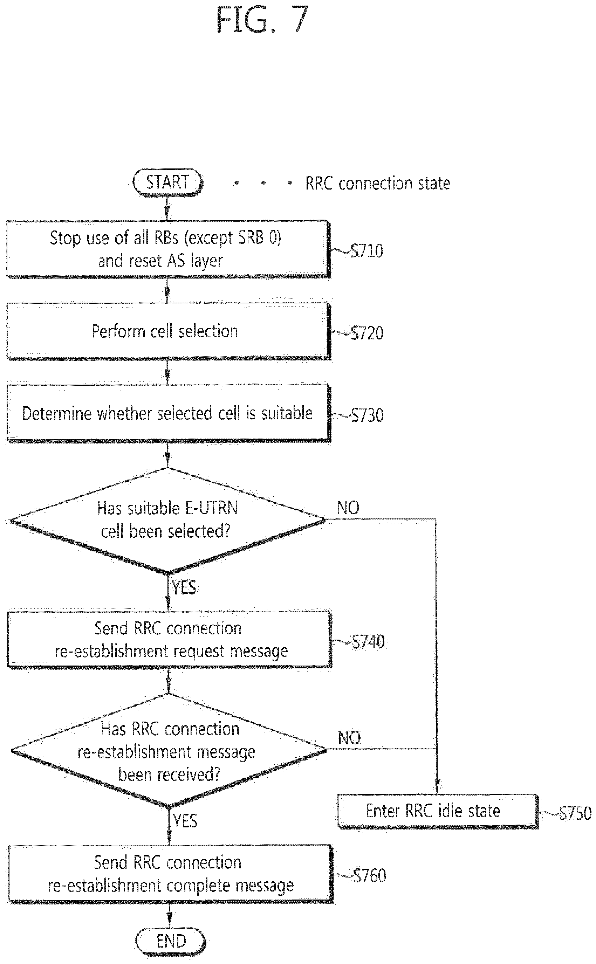

FIG. 7 is a diagram illustrating a RRC connection re-establishment procedure.

Referring to FIG. 7, the UE stops the used of all radio bearers which have been set except for signaling radio bearer #0 (SRB 0) and initializes each sub-layer of the AS (S710). Further, each sub-layer and the PHY layer are set as a default configuration. The UE maintains the RRC connection state during such a process.

The UE performs a cell selection procedure for performing the RRC connection reconfiguration procedure (S720). The cell selection procedure in the RRC connection reconfiguration procedure may be performed the same as the cell selection procedure performed in the RRC idle state of the UE even though the UE maintains the RRC connection state.

The UE verifies the system information of the corresponding cell to determine whether the corresponding cell is a suitable cell or not, after performing the cell selection procedure (S730). When it is determined that the selected cell is the suitable E-UTRAN cell, the UE transmits an RRC connection reestablishment request message to the corresponding cell (S740).

Meanwhile, when it is determined that the cell selected through the cell selection procedure for performing the RRC connection reestablishment procedure is the cell using the RAT other than the E-UTRAN, the UE stops the RRC connection reestablishment procedure and enters the RRC idle state (S750).

The UE may be implemented so that the cell selection procedure and the suitability verification of the cell by receiving the system information of the selected cell are finished within a limited time. To this end, the UE may drive a timer according to the starting of the RRC connection reestablishment procedure. The timer may stop when it is determined that the UE selects the suitable cell. When the timer ends, the UE may regard that the RRC connection reestablishment procedure is failed and enter the RRC idle state. The timer is hereinafter referred to as a radio link failure timer. In LTE specification TS 36.331, a timer called T311 may be used as the radio link failure timer. The UE may acquire the setting value of the timer from the system information of the serving cell.

In the case of receiving and accepting the RRC connection reestablishment request message from the UE, the cell transmits a RRC connection reestablishment message to the UE.

The UE receiving the RRC connection reestablishment message from the cell reconfigures the PDCP sub-layer and the RLC sub-layer for the SRB1. Further, the UE calculates various key values related with security setting and reconfigures the PDCP sub-layer responsible for the security with newly calculated security key values. As a result, the SRB 1 between the UE and the cell is opened, and the RRC control message may be transmitted and received. The UE completes the restarting of the SRB1, and transmits to the cell an RRC connection reestablishment complete message that the RRC connection reestablishment procedure is completed (S760).

On the contrary, in the case of receiving and rejecting the RRC connection reestablishment request message from the UE, the cell transmits a RRC connection reestablishment reject message to the UE.

When the RRC connection reestablishment procedure is successfully performed, the cell and the UE perform the RRC connection reestablishment procedure. As a result, the UE restores a state before performing the RRC connection reestablishment procedure and maximally secures continuity of the service.

Hereinafter, an operation of the terminal and the network associated with RRC connection rejection will be described. In the RRC connection establishment procedure, when the network transmits an RRC connection denial message to the terminal in response to an RRC connection request message, the network does not permit the terminal to access the corresponding cell and/or the RAT of the corresponding cell according to a current network situation. To this end, the network may encapsulate in the RRC connection rejection message information associated with a cell reselection priority and/or access limit information for limiting cell access so as to stop the terminal from accessing the network.

The network may encapsulate in the RRC rejected connection message lowest priority request information indicating that a lowest priority is to be applied when the terminal performs the cell reselection. The lowest priority request information may include lowest priority type information indicating a type to which the lowest priority is applied and lowest priority timer information which is application duration of the lowest priority. The lowest priority type information may be configured to instruct the lowest priority to be applied to a frequency of a cell that transmits the RRC connection rejection message or the lowest priority to be applied to all frequencies of the RAT of the corresponding cell.

When the terminal receives the RRC connection rejection message including the lowest priority request information, the terminal starts a timer set as the lowest priority application duration and applies the lowest priority to a target indicated by the lowest priority type information to perform the cell reselection.

Meanwhile, when the lowest priority information is provided through the RRC connection rejection message, the lowest priority information may collide with a reselection priority signaled by the network. In this case, the terminal may be implemented to be operated by preferentially applying the lowest priority to a specific frequency according to the lowest priority information provided through the RRC connection rejection message. Additionally, the lowest priority information depending on the RRC connection rejection message may collide with application of an implicit priority depending on a terminal-originated indication like a multimedia broadcast multicast service (MBMS) interest indication, a closed subscriber group (CSG) cell associated proxy indication, and an IDC interference associated IDC indication. As a result, the priority to be preferentially applied may follow the implementation of the terminal or the network.

The terminal may preferentially apply the priority provided through the dedicated signaling such as the lowest priority application request information by the RRC connection rejection than the priority provided through the system information at the time of performing the cell reselection in the RRC idle state. However, when the priority provided through the dedicated signaling is continuously applied even in the case where the terminal may not camp on the normal cell, a possibility that the terminal will be prevented from camping on the normal cell or the acceptable cell increases. As a result, the terminal may receive a limited service or no service, which may degrade the quality of the service provided to the terminal. Therefore, a method that selectively applies the frequency priority according to the state of the terminal in the cell reselection by the terminal in the RRC idle state needs to be provided.

Hereinafter, in describing the cell reselection method based on priority handling according to the embodiment of the present invention, the application of the dedicatedly signaled priority will be described by using the application of the lowest priority information depending on the RRC connection rejection as an example. However, a scope of the present invention is not limited thereto and may be applied to even the cell reselection based on the priority handling through general dedicated signaling including the application of the lowest priority depending on the RRC connection rejection.

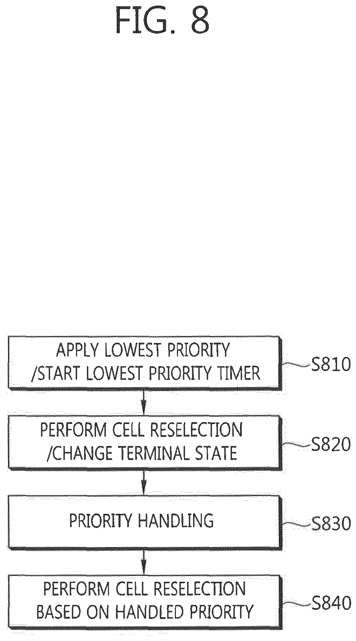

FIG. 8 is a flowchart illustrating a cell reselection method based on priority handling according to an example useful for understanding the invention.

Referring to FIG. 8, the terminal attempts the RRC connection establishment with a previous serving cell, but may suffer from rejection of the RRC connection from the cell. The terminal may acquire the lowest priority application request information in the RRC connection rejection. When the terminal acquires the lowest priority request information, the terminal may correspondingly apply the lowest priority to one or more frequencies and/or all frequencies of specific RAT (S810). As the terminal acquires the lowest priority application request information, the terminal may start a lowest priority timer associated with the application of the lowest priority.

The terminal performs the cell reselection by applying the lowest priority (S820). As the cell reselection is evaluated according to the changed priority, the target cell may be selected. The terminal may camp on the selected target cell. The camp state of the terminal may be changed depending on a characteristic of the target cell. The camp state change of the terminal may be as follows.

- Normal camp state (a state in which the terminal camps on the normal cell, 'camped normally state') → any cell selection state: A state in which the terminal may not camp on both the normal cell and the acceptable cell (any cell selection state): A case in which the normal may not be found through the cell reselection.
- Camped on any cell state (a state in which the terminal camps on not the normal cell but the acceptable cell, camped on any cell state) → normal camp state: A case in which the normal is found through the cell reselection.
- Camped on any cell state → Any cell selection state: A case in which the acceptable cell may not be found through the cell reselection.
- Any cell selection state → Camped on any cell state: A case in which the acceptable cell is found.

The terminal handles the priority to be applied to the cell reselection according to the camp state (S830).

When the terminal is in the normal camp state, the terminal basically applies the priority provided through the system information broadcasted from the cell, however, more preferentially applies the priority provided through the dedicated signaling. For example, when the terminal in the normal camp state receives the lowest priority application request information by the RRC connection rejection, the terminal may determine applying the lowest priority to at least one frequency depending on the lowest priority application request information and applying the priority provided through the system information to residual frequencies.

When the terminal is not in the normal camp-on state, the priority handling method by the terminal may be divided and considered as follows.

1. A technique of stopping the application of the lowest priority when the terminal is in the camped on any cell state or the any cell selection state.

In handling the priority for the cell reselection, when the terminal is not in the normal camp-on state, the terminal may stop the application of the lowest priority depending on the lowest priority application request information. The terminal may stop the application of the lowest priority even though the lowest priority timer is being driven. In this case, the terminal may determine applying only the priority provided through the system information in performing the cell reselection.

When the normal camp state is changed to the any cell selection state, the terminal may determine stopping the application of the lowest priority.

While the terminal already stops the application of the lowest priority in the any cell selection state, when the any cell selection state is changed to the camped on any cell state, the terminal may continuously stop the application of the lowest priority.

Although the terminal stops the application of the lowest priority, the terminal may conserve the lowest priority application request information.

The terminal may continuously operate or stop the lowest priority timer when stopping the application of the lowest priority.

When the terminal finds the normal cell and camps the found normal cell to become in the normal camp state, the terminal may determine the application of the lowest priority only in the case where the lowest priority timer is being driven.

In the case where the lowest priority timer continuously operates at the time of stopping the application of the lowest priority, the terminal may apply or not apply the lowest priority according to the operation of the lowest priority timer when being in the normal camp state.

In the case where the lowest priority timer stops at the time of stopping the application of the lowest priority, the terminal may start the lowest priority timer and apply the lowest priority as being in the normal camp state.

Meanwhile, when the terminal finds the normal cell and camps on the found normal cell to become in the normal camp state, the terminal applies the lowest priority regardless of the driving of the lowest priority timer in the related art to thereby newly drive the lowest priority timer. When the lowest priority timer stops, the lowest priority timer may be driven by setting the lowest priority timer to a residual timer value. When the lowest priority timer stops or expires, the terminal newly sets the lowest priority timer to a timer value depending on the lowest priority application request information to start the lowest priority timer.

Additionally, when the terminal stops the application of the lowest priority, the terminal may cancel the lowest priority application request information. In this case, the terminal may reset the lowest priority timer.

When the terminal cancels the lowest priority application request information at the time of stopping the application of the lowest priority, even though the terminal becomes in the normal camp state, information on the lowest priority does not exist and the timer may not operate, and as a result, the terminal does not apply the lowest priority.

2. A technique of stopping the application of the lowest priority when the terminal is in the any cell selection state.

When the normal camp-on state and/or the predetermined cell state are changed to the any cell selection state, the terminal may stop the application of the lowest priority depending on the lowest priority application request information. The terminal may stop the application of the lowest priority even though the lowest priority timer is being driven. In this case, the terminal may determine applying only the priority provided through the system information in performing the cell reselection.

When the normal camp state is changed to the any cell selection state, the terminal may determine stopping the application of the lowest priority.

When the normal cell camp state is changed to the any cell selection state, the terminal may determine stopping the application of the lowest priority.

The terminal that determines stopping the application of the lowest priority may conserve the lowest priority application request information.

The terminal may continuously operate or stop the lowest priority timer when stopping the application of the lowest priority.

In the case where the lowest priority timer continuously operates at the time of stopping the application of the lowest priority, the terminal may apply or not apply the lowest priority according to the operation of the lowest priority timer when being in the normal camp state or the camped on any cell state.

In the case where the lowest priority timer stops at the time of stopping the application of the lowest priority, the terminal may start the lowest priority timer and apply the lowest priority as being in the normal camp state or the camped on any cell state. The terminal in the camped on any cell state may continuously apply the lowest priority while the lowest priority timer operates when the lower priority is already applied.

Meanwhile, when the terminal finds the normal cell or the acceptable cell and camps on the found normal cell or acceptable cell to become in the normal camp state or camped on any cell state, the terminal applies the lowest priority regardless of the driving of the lowest priority timer in the related art to thereby newly drive the lowest priority timer. When the lowest priority timer stops, the terminal may set the lowest priority timer to the residual timer value and drive the lowest priority timer. When the lowest priority timer stops or expires, the terminal may newly set the lowest priority timer to the timer value depending on the lowest priority application request information and start the lowest priority timer.

Additionally, when the terminal stops the application of the lowest priority, the terminal may cancel the lowest priority application request information. In this case, the terminal may reset the lowest priority timer.

When the terminal cancels the lowest priority application request information at the time of stopping the application of the lowest priority, even though the terminal becomes in the normal camp state or the camped on any cell state, the information on the lowest priority does not exist and the timer may not operate, and as a result, the terminal does not apply the lowest priority.

Referring back to FIG. 8, the terminal performs the cell reselection based on the handled priority (S840). The terminal applies the lowest priority to at least one frequency or all frequencies of specific RAT and applies the priority provided through the system information to residual frequencies to perform the cell reselection. Alternatively, the terminal applies the priority provided through the system information to all frequencies to perform the cell reselection.

Hereinafter, the embodiment of the present invention will be described in more detail with reference to the drawings.

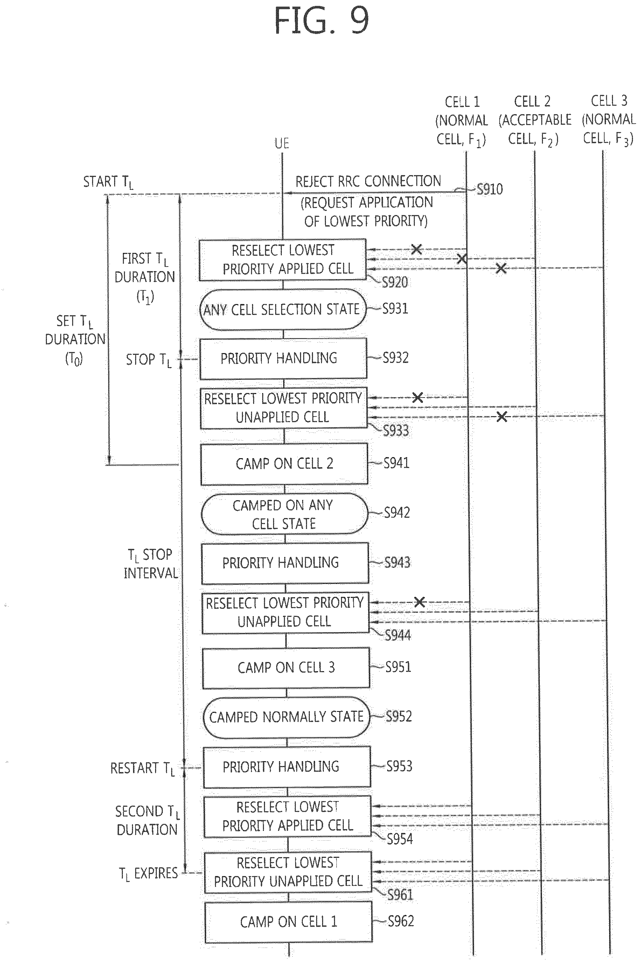

FIG. 9 is a flowchart illustrating one example of a cell reselection method based on priority handling according to an embodiment of the present invention.

In the example of FIG. 9, it is assumed that the terminal is in the RRC idle state, cell 1 as a normal cell is operated on $f_1$, cell 2 as the acceptable cell of the terminal is operated on $f_2$, and cell 3 as the normal cell is operated on $f_3$. According to the priority provided by the system information, $f_1 > f_3 > f_2$ is assumed. Further, according to the priority handling illustrated in FIG. 9, it is assumed that the lowest priority is applied to the case in which the terminal is in the normal camp state.

Referring to FIG. 9, the terminal attempts the RRC connection establishment with cell 1, but receives the RRC connection rejection message from cell 1 (S910). The RRC connection rejection message may include the lowest application request information. The lowest application request information may instruct the application of the lowest priority to f1 and indicate a set value $T_0$ of the lowest priority timer $T_L$. As the RRC connection rejection message is received, the terminal determines the application of the lowest priority to $f_1$ and starts $T_L$ set to $T_0$.

The terminal performs the cell reselection (S920).

In spite of the cell reselection of the terminal, the terminal may not discover the normal cell. As a result, the terminal enters the any cell selection state (S931).

The terminal that enters the any cell selection state performs the priority handling (S932). Since the terminal is in the any cell selection state, the terminal may stop the application of the lowest priority and determine the application of only the priority provided through the system information. Therefore, the terminal may stop $T_L$. However, the terminal may continuously conserve the lowest priority application request information acquired through the RRC connection rejection message.

The terminal performs the cell reselection while the lowest priority is not applied (S933). The terminal applies only the priority provided through the system information to perform the cell reselection.

The terminal may discover cell 2 which is the acceptable cell by the cell reselection. The terminal may camp on cell 2 (S941) and enter the camped on any cell state (S942).

The terminal may perform the priority handling depending on entering the camped on any cell state (S943). Since the state of the terminal is not changed to the normal camp state, the terminal does not continuously apply the lowest priority and may determine the application of the priority provided through the system information. In this case, the priority provided through the system information may be a priority provided from cell 2 which is the cell which the terminal camps on. Further, the terminal may continuously conserve the lowest priority application request information acquired through the RRC connection rejection message.

The terminal performs the cell reselection (S944). The terminal applies only the priority provided through the system information to perform the cell reselection.

The terminal may discover cell 3 which is the normal cell by the cell reselection. The terminal may camp on cell 3 (S951) and enter the camped normally state (S952).

The terminal that enters the normal camp state performs the priority handling (S953). The terminal may restart the remaining $T_L$. A remaining duration of the restarted $T_L$ may be a remaining duration $T_2$ acquired by subtracting $T_1$ which is a duration of $T_L$ until first stop from $T_0$ which is a set $T_L$ duration. As a result, the terminal may determine applying the lowest priority to f1 and the priority provided by the system information to the residual frequencies. Herein, the priority provided through the system information may be the priority provided from cell 3 which is the cell which the terminal camps on.

The terminal performs the cell reselection by applying the lowest priority (S954). The terminal applies the lowest priority to $f_1$ and the priority provided through the system information to $f_2$ and $f_3$ to perform the cell reselection.

Meanwhile, $T_L$ may expire while the terminal performs the cell reselection. In this case, the terminal does not apply the lowest priority again and may perform the cell reselection (S961). The terminal applies only the priority provided through the system information to perform the cell reselection.

The terminal may select cell 1 having the highest priority as the target cell and camp on cell 1 (S962).

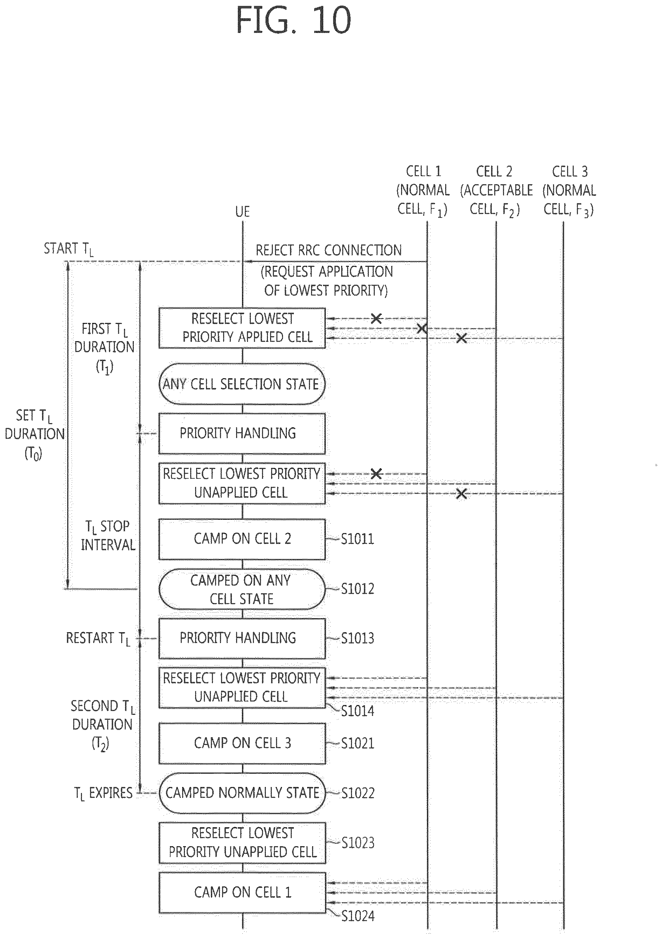

FIG. 10 is a flowchart illustrating another example of the cell reselection method based on priority handling according to the embodiment of the present invention.

In the example illustrated in FIG. 10, it is assumed that the lowest priority is applied only when the terminal is in the camped normally state or the camped on any cell state. It is assumed that a residual communication environment is the same as that of FIG. 9.

As compared with FIG. 9, the terminal in the any cell selection state may discover cell 2 and camp on cell 2 (S1011) and apply the lowest priority when entering the camped on any cell state (S1012). Therefore, the terminal may restart the remaining $T_L$ in performing the priority handling. The duration of TL may be a residual duration $T_2$ acquired by subtracting $T_1$ from $T_0$ similarly to FIG. 9. Further, the terminal may determine applying the lowest priority to $f_1$ and the priority provided by the system information to the residual frequencies. Herein, the priority provided through the system information may be the priority provided from cell 2 which is the cell which the terminal currently camps on.

The terminal may perform the cell reselection by applying the lowest priority (S1014). The terminal applies the lowest priority to $f_1$ and the priority provided through the system information to $f_2$ and $f_3$ to perform the cell reselection.

According to a result of the cell reselection performed by applying the lowest priority, the terminal may determine cell 3 which is operated on $f_3$ as the target cell and camp on cell 3 (S1021). As a result, the terminal may enter the camped normally state (S1022).

Meanwhile, although the terminal enters the normal camp state, $T_L$ may expire. As a result, the terminal stops the application of the lowest priority and performs the cell reselection based on the priority provided through the system information (S1023). Herein, the priority provided through the system information may be the priority provided from cell 3 which is the cell which the terminal currently camps on.

The terminal may select cell 1 having the highest priority as the target cell and camp on cell 1 (S1024).

In a cell reselection method based on priority handling according to an embodiment of the present invention, a priority is selectively applied a camp-on state of terminal, and as a result, cell reselection can be performed. While a network instructs a lowest priority depending on connection establishment rejection to the terminal, the terminal can more flexibly perform the cell reselection in accordance with a current communication environment. Therefore, although the terminal is instructed the lowest priority depending on the connection establishment rejection from the network, an opportunity in which the terminal can camp on an acceptable cell or a regular cell can be prevented from being lowered. Consequently, the terminal camps on a cell that can provide a more appropriate service to attempt accessing the corresponding cell, thereby more efficiently receiving a service from the network.

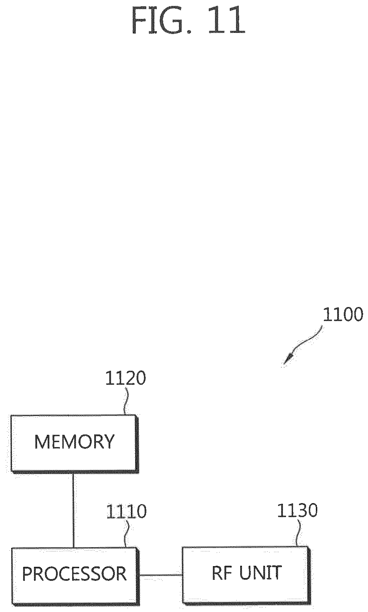

FIG. 11 is a block diagram illustrating a wireless device in which the embodiment of the present invention is implemented.

Referring to FIG. 11, the wireless device 1100 includes a processor 1110, a memory 1120, and a radio frequency (RF) unit 1130. The processor 1110 implements a function, a process, and/or a method which are proposed. The processor 1110 may be configured to handle the priority according to a camp state of the wireless device. The processor 1110 may be configured to perform the cell reselection based on the handled priority. The processor 1110 may be configured to perform the cell reselection performing method according to the embodiment, however, perform the cell reselection performing method by selectively applying the priority. The processor 1110 may be configured to implement the embodiment described with reference to FIGS. 8 to 10.

The RF unit 1130 is connected with the processor 1110 to transmit and receive a radio signal.

The processor may include an application-specific integrated circuit (ASIC), another chip set, a logic circuit and/or a data processing apparatus. The memory may include a read-only memory (ROM), a random access memory (RAM), a flash memory, a memory card, a storage medium, and/or other storage device. The RF unit may include a baseband circuit for processing the radio signal. When the exemplary embodiment is implemented by software, the aforementioned technique may be implemented by a module (a process, a function, and the like) performing the aforementioned function. The module may be stored in the memory and executed by the processor. The memory may be positioned inside or outside the processor and connected with the processor by various well-known means.

In the aforementioned exemplary system, methods have been described based on flowcharts as a series of steps or blocks, but the methods are not limited to the order of the steps of the present invention and any step may occur in a step or an order different from or simultaneously as the aforementioned step or order.

## Claims

1.   A cell reselection method performed by a wireless device (1100) in a wireless communication system, the method comprising:

    receiving, from a network, first priority information through a dedicated signaling;
    receiving, from the network, second priority information through a broadcast signaling;
    receiving, from the network, lowest priority request information and a timer value through a radio resource control, RRC, connection reject message,

wherein the lowest priority request information is for indicating a priority of a current frequency or all frequencies of radio access technology, RAT, to be the lowest, and

wherein the timer value indicates a time interval to which the lowest priority request information is applied; and performing a cell reselection with selectively applying one of the first priority information and the second priority information based on a state of the wireless device (1100),

wherein based on a state of the wireless device being in a camped normally state,

performing the cell reselection by applying the lowest priority request information during the time interval indicated by the timer value, and

wherein based on a state of the wireless device that is camped on any cell state,

performing the cell reselection by applying the second priority information received through the broadcast signaling;

conserving the first priority information, and

stopping application of the lowest priority request information, and conserving the lowest priority request information received through the RRC connection reject message.

2. A wireless device (1100) that operates in a wireless communication system, the wireless device comprising:

a radio frequency, RF, unit (1130) which transmits or receives a radio signal; and
a processor (1110) which operates in a functional association with the RF unit (1130),
wherein the processor (1110) is configured to:

receive first priority information through dedicated signaling;
receive second priority information through a broadcast signaling, the processor (1110) being further configured to:

receive lowest priority request information and a timer value through a radio resource control, RRC, connection reject message,
wherein the lowest priority request information is for indicating a priority of a current frequency or all frequencies of radio access technology, RAT, is to be the lowest, and
wherein the timer value indicates a time interval to which the lowest priority request information is applied; and
perform a cell reselection with selectively applying one of the first priority information and the second priority information based on a state of the wireless device (1100),
wherein based on a state of the wireless device being in a camped normally state,
perform the cell reselection by applying the lowest priority request information during the time interval indicated by the timer value, and
wherein based on a state of the wireless device that is camped on any cell state,
perform the cell reselection by applying the second priority information received through the broadcast signaling;
conserve the first priority information, and
stop application of the lowest priority request information, and conserve the lowest priority request information received through the RRC connection reject message.

**Patentansprüche**

1. Ein Zellenneuauswahlverfahren, das von einem drahtlosen Gerät (1100) in einem drahtlosen Kommunikationssystem durchgeführt wird, wobei das Verfahren umfasst:

Empfangen erster Prioritätsinformationen von einem Netzwerk über eine dedizierte Signalisierung;
Empfangen zweiter Prioritätsinformationen von dem Netzwerk über eine Rundsende-Signalisierung;
Empfangen von Anforderungsinformationen einer niedrigsten Priorität und eines Timerwerts von dem Netzwerk durch eine Radio Resource Control, RRC,-Verbindungsabweisungsnachricht,
wobei die Anforderungsinformation der niedrigsten Priorität dazu dient, eine Priorität einer aktuellen Frequenz oder aller Frequenzen der Funkzugangstechnologie, RAT, als die niedrigste anzuzeigen, und
wobei der Timerwert ein Zeitintervall angibt, auf das die Anforderungsinformationen der niedrigsten Priorität angewendet werden; und
Durchführen einer Zellenneuauswahl mit selektivem Anwenden einer der ersten Prioritätsinformationen und der zweiten Prioritätsinformationen basierend auf einem Zustand des drahtlosen Geräts (1100),

wobei basierend auf einem Zustand des drahtlosen Geräts, das sich in einem "camped normally"-Zustand befindet,

Durchführen der Zellenneuauswahl durch Anwenden der Anforderungsinformationen der niedrigsten Priorität während des durch den Timerwert angegebenen Zeitintervalls, und

wobei basierend auf einem Zustand des drahtlosen Geräts, das in einem beliebigen Zellzustand befindet,

Durchführen der Zellenneuauswahl durch Anwenden der zweiten Prioritätsinformationen, die über die Rundsende-Signalisierung empfangen wurden;

Konservieren der ersten Prioritätsinformationen, und

Anhalten der Anwendung der Anforderungsinformationen der niedrigsten Priorität und Konservieren der Anforderungsinformationen der niedrigsten Priorität, die durch die RRC-Verbindungsabweisungsnachricht empfangen wurden.

2. Ein drahtloses Gerät (1100), das in einem drahtlosen Kommunikationssystem arbeitet, wobei das drahtlose Gerät umfasst:

eine Hochfrequenz-, HF-, Einheit (1130), die ein Funksignal sendet oder empfängt; und

einen Prozessor (1110), der in einem funktionalen Zusammenhang mit der HF-Einheit (1130) arbeitet,

wobei der Prozessor (1110) konfiguriert ist, um:

erste Prioritätsinformationen durch dedizierte Signalisierung zu erhalten;

zweite Prioritätsinformationen über eine Rundsende-Signalisierung zu empfangen,

wobei der Prozessor (1110) weiter konfiguriert ist, um:

Anforderungsinformationen einer niedrigsten Priorität und einen Timerwert über eine Radio Resource Control, RRC, -Verbindungsabweisungsnachricht zu empfangen,

wobei die Anforderungsinformationen der niedrigsten Priorität dazu dienen, eine Priorität einer aktuellen Frequenz oder aller Frequenzen der Funkzugangstechnologie, RAT, anzuzeigen, die niedrigste zu sein, und

wobei der Timerwert ein Zeitintervall angibt, auf das die Anforderungsinformationen der niedrigsten Priorität angewendet werden; und

eine Zellenneuauswahl durchzuführen mit selektiver Anwendung einer der ersten Prioritätsinformationen und der zweiten Prioritätsinformationen basierend auf einem Zustand des drahtlosen Geräts (1100),

wobei basierend auf einem Zustand des drahtlosen Geräts, das sich in einem "camped normally"-Zustand befindet,

die Zellenneuauswahl durch Anwendung der Anforderungsinformationen der niedrigsten Priorität während des durch den Timerwert angegebenen Zeitintervalls durchzuführen, und

wobei basierend auf einem Zustand des drahtlosen Geräts, das sich in einem beliebigen Zellzustand befindet,

die Zellenneuauswahl durch Anwendung der über die Rundsende-Signalisierung empfangenen zweiten Prioritätsinformationen durchzuführen;

die ersten Prioritätsinformationen zu konservieren, und

die Anwendung der Anforderungsinformationen der niedrigsten Priorität zu stoppen und die Anforderungsinformationen der niedrigsten Priorität, die durch die RRC-Verbindungsabweisungsnachricht empfangen wurden, zu konservieren.

## Revendications

1. Procédé de resélection de cellule effectué par un dispositif sans fil (1100) dans un système de communication sans fil, le procédé consistant à :

recevoir, en provenance d'un réseau, des premières informations de priorité par une signalisation dédiée ;

recevoir, en provenance du réseau, des secondes informations de priorité par une signalisation de diffusion ;

recevoir, en provenance du réseau, des informations de requête de faible

priorité et une valeur de temporisation par un message de rejet de connexion de gestion des ressources radio, RRC,

les informations de requête de faible priorité servant à indiquer une priorité d'une fréquence actuelle ou de toutes les fréquences de la technologie d'accès radio, RAT, devant être la/les plus faible(s), et la valeur de temporisation indiquant un intervalle de temps auquel les informations de requête de faible priorité sont appliquées ; et

procéder à une resélection de cellule par application sélective des premières informations de priorité ou des secondes informations de priorité en fonction d'un état du dispositif sans fil (1100), en fonction d'un état du dispositif sans fil étant dans un état normalement résident, procéder à la resélection de cellule par application des informations de requête de faible priorité pendant l'intervalle de temps indiqué par la valeur de temporisation, et en fonction d'un état du dispositif sans fil qui est dans un état normalement résident, procéder à la resélection de cellule par application des secondes informations de priorité reçues par la signalisation de diffusion ; conserver les premières informations de priorité, et arrêter l'application des informations de requête de faible priorité, et conserver les informations de requête de faible priorité reçues par le message de rejet de connexion RRC.

2. Dispositif sans fil (1100) qui fonctionne dans un système de communication sans fil, le dispositif sans fil comprenant :

une unité de radiofréquence, RF, (1130) qui transmet et reçoit un signal radio ; et un processeur (1110) qui fonctionne en association fonctionnelle avec l'unité RF (1130), le processeur (1110) étant conçu pour :

recevoir les premières informations de priorité par une signalisation dédiée ; recevoir les secondes informations de priorité par une signalisation de diffusion ; le processeur (1110) étant en outre conçu pour :

recevoir les informations de requête de faible priorité et une valeur de temporisation par un message de rejet de connexion de gestion des ressources radio, RRC, les informations de requête de faible priorité servant à indiquer une priorité d'une fréquence actuelle ou de toutes les fréquences de la technologie d'accès radio, RAT, devant être la/les plus faible(s), et la valeur de temporisateur indiquant un intervalle de temps auquel les informations de requête de faible priorité sont appliquées ; et procéder à une resélection de cellule par application sélective des premières informations de priorité ou des secondes informations de priorité en fonction d'un état du dispositif sans fil (1100), en fonction d'un état du dispositif sans fil étant dans un état normalement résident, procéder à la resélection de cellule par application des informations de requête de faible priorité pendant l'intervalle de temps indiqué par la valeur de temporisateur, et en fonction d'un état du dispositif sans fil qui est résident dans un quelconque état de cellule, procéder à la resélection de cellule par application des secondes informations de priorité reçues par la signalisation de diffusion ; conserver les premières informations de priorité, et arrêter l'application des informations de requête de faible priorité, et conserver les informations de requête de faible priorité reçus par le message de rejet de connexion RRC.

# FIG. 1

# FIG. 2

# FIG. 3

# FIG. 4

```
                    ┌──────────────────────────┐
                    │ Select PLMN and RAT      │
                    │ communication method (RAT)│──S410
                    └──────────────────────────┘
                                │
                                ▼
                    ┌──────────────────────────┐
                    │    Select initial cell   │──S420
                    └──────────────────────────┘
                                │
                                ▼
                          ╱────────────╲            No
                        ╱ Is it necessary ╲──────────────┐
                        ╲ for network       ╱            │
                          ╲ registration? ╱              │
                            ╲────────────╱               │
                                │ Yes                    │
                                ▼                         │
    ┌─────────────┐   ┌──────────────────────────┐       │
    │   Signal    │   │ Perform network registration│──S430│
    │ measurement │   │     (NAS procedure)       │       │
    └─────────────┘   └──────────────────────────┘       │
                                │                         │
                                ▼                         │
                    ┌──────────────────────────┐          │
                    │      Cell reselection    │──S440◄───┘
                    └──────────────────────────┘
                                │
                                ▼
              No          ╱────────────╲          Yes
        ┌───────────────╲ Has new cell  ╱────────────┐
        │                 ╲ been selected?╱           │
        │                   ╲────────────╱            │
```

# FIG. 5

UE

NETWORK

RRC connection request ─ S510

RRC connection configuration ─ S520

RRC connection configuration complete ─ S530

# FIG. 6

# FIG. 7

```
( START )  · · · · RRC connection state
     │
     ▼
┌─────────────────────────────┐
│ Stop use of all RBs (except SRB 0) │ ─S710
│ and reset AS layer          │
└─────────────────────────────┘
     │
     ▼
┌─────────────────────────────┐
│ Perform cell selection      │ ─S720
└─────────────────────────────┘
     │
     ▼
┌─────────────────────────────┐
│ Determine whether selected cell is suitable │ ─S730
└─────────────────────────────┘
     │
     ▼
    ╱╲
   ╱   ╲  Has suitable E-UTRN      NO
  ╱     ╲ cell been selected? ──────────────┐
   ╲   ╱                                    │
    ╲ ╱                                     │
     │ YES                                  │
     ▼                                      │
┌─────────────────────────────┐            │
│ Send RRC connection         │ ─S740      │
│ re-establishment request message │        │
└─────────────────────────────┘            │
     │                                      │
     ▼                                      │
    ╱╲                                      │
   ╱   ╲ Has RRC connection         NO     │
  ╱     ╲ re-establishment message ─────┐  │
   ╲    ╱ been received?                │  │
    ╲  ╱                                │  │
     │ YES                             ▼  ▼
     ▼                          ┌──────────────────┐
┌─────────────────────────────┐│ Enter RRC idle state │ ─S750
│ Send RRC connection         ││└──────────────────┘
│ re-establishment complete message │ ─S760
└─────────────────────────────┘
     │
     ▼
  ( END )
```

# FIG. 8

```
┌─────────────────────────────────┐
│       APPLY LOWEST PRIORITY      │
│   /START LOWEST PRIORITY TIMER   │──S810
└─────────────────────────────────┘
                 │
                 ▼
┌─────────────────────────────────┐
│     PERFORM CELL RESELECTION     │
│      /CHANGE TERMINAL STATE      │──S820
└─────────────────────────────────┘
                 │
                 ▼
┌─────────────────────────────────┐
│                                  │
│         PRIORITY HANDLING        │──S830
│                                  │
└─────────────────────────────────┘
                 │
                 ▼
┌─────────────────────────────────┐
│     PERFORM CELL RESELECTION     │
│    BASED ON HANDLED PRIORITY     │──S840
└─────────────────────────────────┘
```

# FIG. 9

# FIG. 10

# FIG. 11

1100

1120

MEMORY

1110

PROCESSOR

1130

RF UNIT

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- User Equipment (UE) procedures in idle mode (Release 8). *3GPP TS 36.304 V8.5.0,* March 2009